# EUROPEAN PATENT SPECIFICATION

(11) **EP 3 309 493 B1**
(45) Date of publication and mention of the grant of the patent: **15.05.2019**
(21) Application number: 17195940.6
(22) Date of filing: 11.10.2017
(51) Int. Cl.: F28D 20/00

(54) **STRUCTURAL MODULE WHICH CAN STORE THERMAL ENERGY**
STRUKTURELLES MODUL ZUR SPEICHERUNG VON THERMISCHER ENERGIE
ÉLÉMENT DE STRUCTURE MODULAIRE POUVANT STOCKER DE L'ÉNERGIE THERMIQUE

(30) Priority: 17.10.2016 TR 201614571
(43) Date of publication of application: 18.04.2018
(73) Proprietor: Binici, Baris, Ankara (TR); Aldemir, Alper, Ankara (TR)
(72) Inventor: Binici, Baris, Ankara (TR); Aldemir, Alper, Ankara (TR)
(74) Representative: Inal, Aysegul Seda

(56) References cited:
- DE-A1-102010 052 255
- DE-A1-102013 003 357
- JP-A- H08 110 185
- US-A1- 2011 286 724

## Description

### Technical Field of the Invention

The invention subject to the application, is related to modular means which can function as support structures while storing thermal energy obtained from any kind of source.

### Known State of the Art (Prior Art)

As it is already known buildings are constructed using means that are structural and cannot be changed (structural walls, columns and beams) or non structural members (partition walls, façade means that carry mechanic or electronic equipment, separation walls etc.). However nowadays, structures that are constructed modularly have the advantage of being more economical as they can be produced rapidly, with quality control and mass production. In the construction sector several modular structural members are present that have been designed to be used in bridges and prefabricated buildings. Seismic isolators, steel cross members or modular transverse beams can be given as the examples to modular structural members. As reinforced concrete structural members that are modularly coupled to each other can easily be replaced, this shall allow to change only the necessary sections of a building and to continue its use in the case that said structures are damaged due to effects such as earthquakes, or environmental or usage conditions. Moreover they can be used for retrofit elements against earthquakes by being integrated to present structures.

Fossil based fuels have been replaced by renewable energy resources in the production of energy as they are harmful to the environment and as they are scarce in resources. In buildings nearly half the energy used is electricity and the rest are used by heating, ventilation and air conditioning systems. Renewable energy resources generally do not enable continuous energy production and usually intermittent production is carried out. For this reason, generally a storage system is required in order to be used when resources cannot be reached. Nowadays different storage technologies, primarily lithium ion battery technologies are used for storing renewable energy in buildings. These storage techniques are both expensive and are harmful to the environment and therefore are not used prevalently in the building sector. If we keep in mind that some of the energy used is consumed as thermal energy, the concept of heat storing walls for storing heat can provide a more efficient and economic alternative to the storage of renewable energy.

DE 10 2010 052255 discloses a heat storing block made of concrete, heat exchangers and heat insulator. Heat storing elements can be combined by using a number of them to form a larger heat storing capacity. The heat storing element was assigned only one purpose which was heat storage and it was not intended as a structural load resisting member. No specific longitudinal reinforcement is available and it cannot be mounted and demounted to a structural system to enhance its load carrying capacity. The heat storing element was insulated by using only a single insulation layer.

'DE 10 2013 003357 and the 'US 2011 286724 discloses heat storing elements made of concrete, heat exchangers and a single layer heat insulator. These elements disclosed concrete core surrounded by an insulation layer to store heat. The heat storing elements were not intended as mountable/demountable structural load resisting members.

'JP H08 110185 further disclosed the heat storing elements made of concrete, heat exchangers and heat insulator. The solid insulation layer in that patent stated as being perlite and the element was not intended to carry loads as a part of a load resisting system.

Melted salt silos, phase changing materials or concrete blocks are used globally, in order to store heat energy obtained from renewable energy sources. Said methods have not been used in buildings as they are more suitable for concentrated solar power electric plants. The main reason for this is that small sized products and/or storage devices adapted to be used in buildings are not available. Recently, although components that are not structural have been tried to be produced by using phase changing materials, these efforts have only been used to feed heating systems and/or condensation systems as their heat storage capacity is low. Moreover carrying out applications on buildings with phase changing materials is quite expensive.

As a result it is necessary to provide a development in order to eliminate the disadvantages in the prior art by developing structural modular members that allow easier application of renewable energy in buildings. These members can be used in buildings as heat storage units, electric batteries as they can convert thermal energy into electric energy, as load bearing walls, isolating partition walls and as earthquake resistant members.

### Brief Description of the Invention and its Aims

The present invention is related to developing structural members that have been designed to carry loads that can also be used as thermal energy storage units and that can be used for other multipurpose applications in order to provide advantages to the prior art and to eliminate the disadvantages mentioned above, the member according to the invention having the features as defined in claim 1.

The aim of the invention is to provide novel modular structural members that can store energy and can be formed as walls that are structural, non structural, and that can act as a thermal storage unit in order to integrate renewable energy sources to buildings by utilizing the usage techniques of modular structures and renewable energy sources in buildings.

Another aim of the invention is to obtain reinforced concrete walls that can store thermal energy from renewable energy sources.

Another aim of the invention is to provide members that are modular and that can be disassembled and replaced easily in the case that said members are damaged or they have fulfilled their usage lives.

Another aim of the invention is that said system is practical as it is modular and it can be applied to previously constructed buildings.

Another aim of the invention is to enable the contribution of structural members to the material and building construction economy by using the cross section central regions of buildings which are not efficient as load bearing members as thermal energy storage units.

Another aim of the invention, is to obtain net-zero energy consumption in buildings and to increase the usage of renewable energy sources in buildings that require strengthening as said thermal energy storage units have been designed to act both as thermal energy storage units and as structural load bearing walls.

Another aim of the invention, is to provide a system that is equipped with special coupling means in order to meet the on-site assembly conditions that is required in prefabricated systems, wherein the members are modular and therefore can be replaced, where the on-site application time has been accelerated by means of said coupling means, and the installation thereof to buildings is easier.

Another aim of the invention is that the system can be designed to be directly integrated via piping to systems that already comprises renewable energy sources that can produce thermal energy.

Another aim of the invention is to be able to produce a thermal storage unit such that the mid section shall not be damaged in case of seismic activity by selecting and designing reinforcements with the desired sizes.

### Definition of the Figures Illustrating the Invention

The figures that have been prepared in order to further illustrate the modular structural members that can store energy and that enable the structural members that were initially designed to be acting as load bearers to function as thermal energy storage units and other multipurpose applications have been described below.
Figure-1, is the schematic general view of modular structural members that can store energy which have been mounted in a frame or outside a frame,
Figure-2, is the schematic general view of different layers that form modular structural members that can store energy,
Figure-3, is the schematic general view of the cross sections of modular structural members that can store energy,
Figure-4, is the schematic general view of the proposed modular structural members that can store energy, which meets the high lateral load and displacement demands,
Figure-5, is the schematic general view of the proposed modular structural members that can store energy, which meets the low lateral load and displacement demands,
Figure-6, is the schematic view of the coupling apparatus developed for coupling the modular structural members that can store energy to each other.
Figure-7, is the schematic view of the coupling apparatus developed for the lower coupling of the modular structural members that can store energy,
Figure-8, is the schematic view of the coupling apparatus developed for the upper coupling of the modular structural members that can store energy,
Figure-9, is the schematic view of the plate geometries that are to be used for anchoring the coupling apparatus of the modular structural members that can store energy,
Figure-10, is the schematic view of the plate types that shall be used for anchoring of the coupling apparatus of the modular structural members that can store energy,
Figure-11, is the schematic general view of heat exchangers that shall be used in modular structural members that can store energy.

### Definitions of the parts/ sections/ aspects forming the invention

The parts/sections/aspects shown in the figures that have been prepared in order to further describe the modular structural members that can store energy developed by means of the invention have each been numbered and the references of each number has been listed below.
**1.** Energy storing modular structural members that are mounted inside a frame
   **1.1.** Concrete thermal energy storage unit
   **1.2.** Flexible protective isolation material
   **1.3.** Highly porous cement based insulation layer
   **1.4.** Box shaped concrete structural member
   **1.5.** Heat exchanger
**2.** Energy storing modular structural member mounted outside a frame
   **2.1.** Concrete thermal energy storage unit
   **2.2.** Flexible protective isolation material
   **2.3.** Highly porous cement based insulation layer
   **2.4.** Box shaped concrete structural member
   **2.5.** Heat exchanger
   **2.6.** Anchoring means
**3.** Proposed reinforcement for heavy load demands
   **3.1.** Box shaped (built or folded) reinforcement
   **3.2.** Horizontal body reinforcement
   **3.3.** Vertical body reinforcement
**4.** Proposed reinforcement for low weight load demands
   **4.1.** Vertical body reinforcement
   **4.2.** Horizontal body reinforcement
**5.** Lower coupling apparatus
   **5.1.** Lower coupling anchor
   **5.2.** Lower coupling cap apparatus
**6.** Upper coupling apparatus
   **6.1.** Iron rod
   **6.2.** Upper coupling cap apparatus
   **6.3.** Upper coupling anchor
**7.** Bolt
**8.** Toothed plate
**9.** Porous plate
**10.** Perforated plate with ribs
**11.** Flat plate

### Detailed Description of the Invention

In this detailed description, the production of the energy storing modular structural member (1,2) subject to the invention shall be exemplified without being limited thereto, only in order to further illustrate the invention.

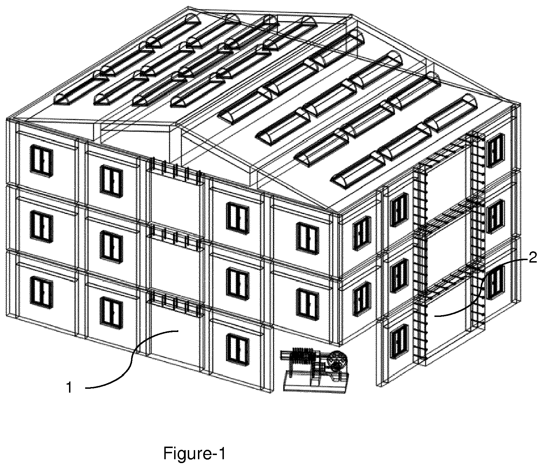

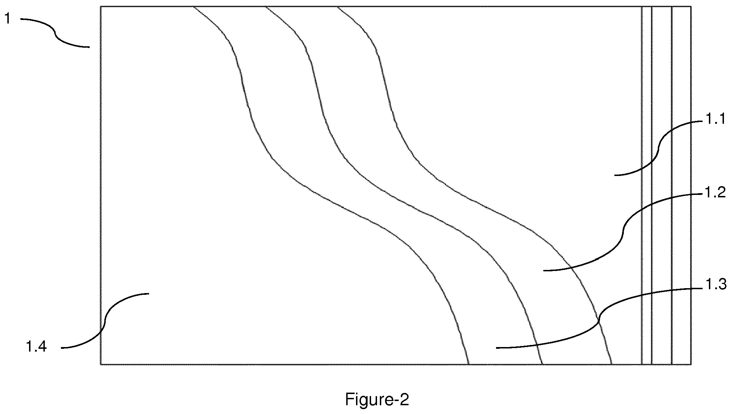

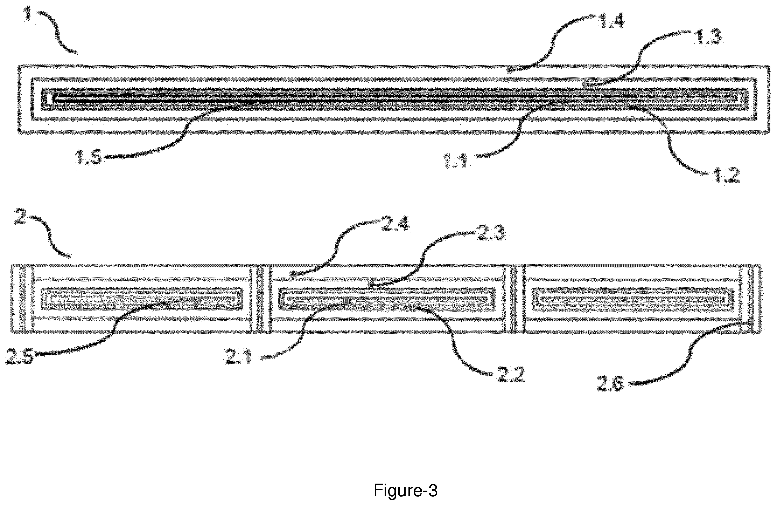

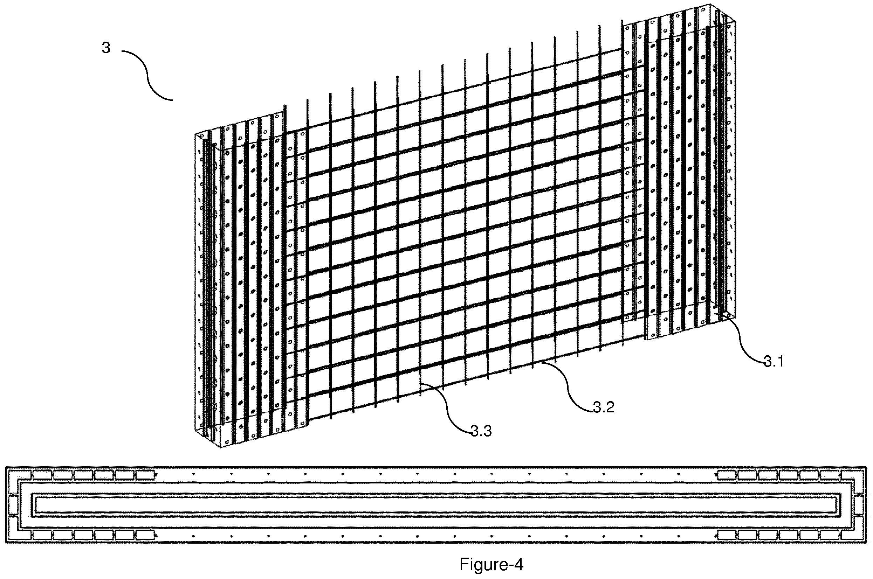

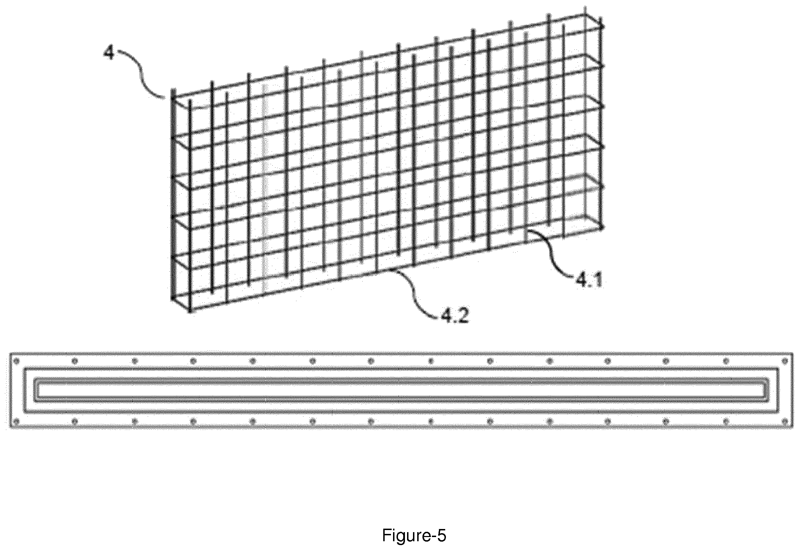

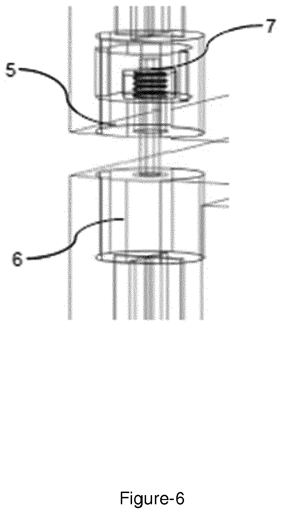

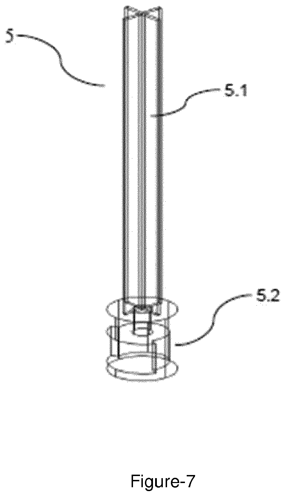

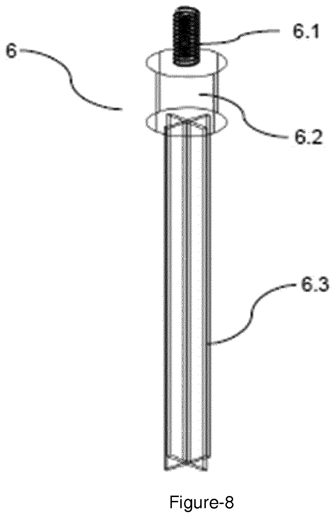

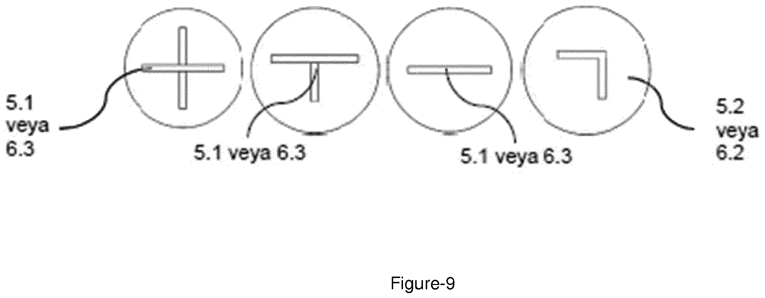

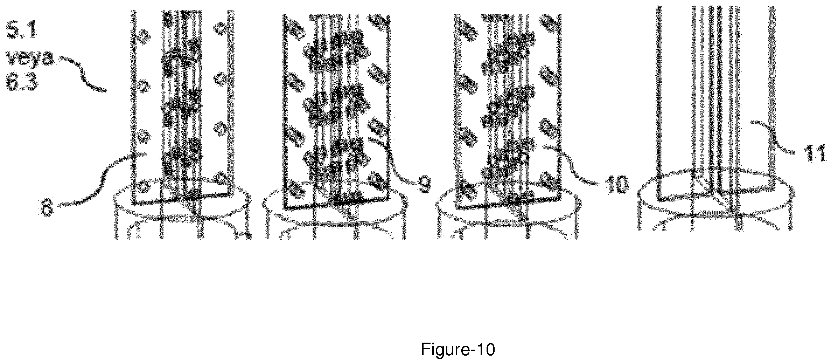

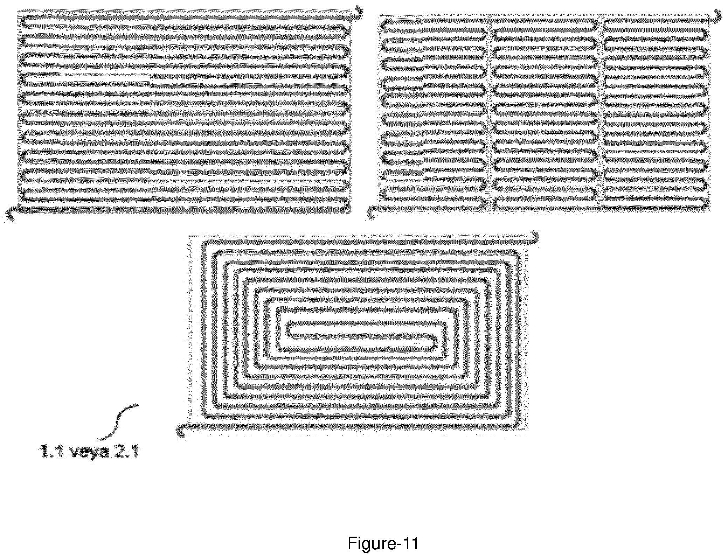

The integration of energy storing modular members that stores energy for buildings fitted with a solar energy system has been shown in Figure 1. Energy storing modular members can both be mounted inside a frame (1) in newly constructed buildings and also can be integrated via anchors (2,6) to the outer frames (2) of buildings that can adapted to use renewable energy sources or to provide strengthening for such existing buildings

The invention can be used by means of a lower coupling apparatus (5) an upper coupling apparatus (6) and bolts (7) which are special coupling means used for multi storey buildings. Therefore the invention aims to meet the energy storage demands of multi storey buildings.

The invention is formed of nesting layers. The innermost layer shall comprise concrete thermal energy units (1.1, 2.1) that are resistant to high temperatures in order to store thermal energy. The conductivity of the heat storing concrete and the resistance against fractures shall be provided by fiber reinforced concrete. Heat transfer between the heat transfer fluid and the concrete plate shall be carried out during charging and discharging by disposing heat exchangers (1.5, 2.5) inside this concrete plate.

Layers (1.2, 2.2) made of flexible protective isolation material that have been produced from materials with low heat transfer coefficient that enable heat insulation in order to minimize losses during heat storage and to prevent the expansion of the heat storing concrete within the inner layer and/or eliminate lateral displacement demands occurring in the said walls during wind and earthquakes have been provided. Materials that are resistant to heat, that are flexible and that have an elasticity module that is lower in comparison to concrete shall be used in this layer.

Materials (1.3, 2.3) that have a porous and or cement based insulation layer produced from materials that have a low heat transfer coefficient, that are provided as rigid layers shall be disposed on said layers in order to provide heat insulation. Insulation materials of any kinds shall be used for this layer including porous cement based layers that are heat insulating materials. The thickness of this material shall be determined according to the maximum temperatures and the heat storage or discharging requirements of the thermal energy storage unit.

Box shaped concrete reinforcement member sections (1.4, 2.4) have been provided in order to function as structural members on the outermost layer. In this section, vertical and transverse reinforcement, steel sections, steel plates or fiber reinforced polymer reinforcement are designed according to the load and displacement demands on the walls and to meet these demands proposed reinforcements (3) will be used under low gravity/seismic/wind loadings whereas (4) will be used high low gravity/seismic/wind loadings. The details of the reinforcements can comprise any kind of reinforcement provided by design engineers during production.

The invention shall be established using specially produced lower and upper coupling apparatuses (5,6), bolts (7) and steel rods that shall be used to provide continuity throughout the height of the building. The lower coupling apparatus (5) shall comprise bolt access points in order to enable easier bolt installation during installation on-site. Toothed sections have been provided on the upper coupling apparatus (6) exclusively for the installation of the iron rods (6.1). The load transfer to the heat storage modular member body by both coupling members shall be enabled by means of special anchoring means such as the lower coupling anchor (5.1) and the upper coupling anchor (6.3). The lower coupling anchor (5.1) and the upper coupling anchor (6.3) can be selected as toothed plates (8), porous plate (9), porous and toothed plate (10) or flat plate (11) in accordance with load demands.

## Claims

1. Modular structural member (1,2) that can store energy obtained from renewable energy sources or from any other type of heat source and at the same time that can provide a support structure for buildings;
said structural member comprising a concrete heat storage unit (1.1, 2.1) that can store heat and that has a heat exchanger (1.5,2.5) installed at the center thereof, and a box shaped concrete reinforced structural member (1.4, 2.4) providing an outermost layer around the heat storage unit (1.1, 2.1), wherein a flexible protective isolation material (1.2, 2.2) is arranged between the heat storage unit (1.1, 2.1) and the reinforced structural member (1.4, 2.4) surrounding the concrete heat storing unit to protect it from thermal expansion and/or load effects from environment and man-made sources
**characterized in that**
a solid insulation layer made from a porous cement based material (1.3, 2.3) is arranged between the flexible protective isolation material (1.2, 2.2) and the outermost reinforced structural member (1.4, 2.4).

2. Energy storing modular structural member (1,2) according to claim 1, **characterized in that** the member further comprises a lower coupling apparatus (5) and upper coupling apparatus (6) that can be used to connect the member to adjacent members thus forming joints of a frame structure.

3. Energy storing modular structural member (1,2) according to claim 2, **characterized in that** the member further comprises anchors (2.6) that are used in the installation joints of the frames.

4. Energy storing modular structural member (1,2) according to claim 2, **characterized in that** said lower coupling apparatus (5) comprises a lower coupling anchor (5.1) and a lower coupling cap apparatus (5.2).

5. Energy storing modular structural member (1,2) according to claim 2, **characterized in that** said upper coupling apparatus (6) is formed of an iron rod (6.1) comprising an upper coupling cap apparatus (6.2) and an upper coupling anchor (6.3).

6. Energy storing modular structural member (1,2) according to claim 1, **characterized in that** said member comprises a reinforcement (3) for heavy load demands and a reinforcement (4) for low load demands.

7. Energy storing modular structural member (1,2) according to claim 6, **characterized in that** said the reinforcement (3) for heavy load demands is formed of a box shaped, cast or folded reinforcement (3.1), a horizontal body reinforcement (3.2) and a vertical body reinforcement (3.3).

8. Energy storing modular structural member (1,2) according to claim 6, **characterized in that** the reinforcement (4) for low load demands is formed of a vertical body reinforcement (4.1) and a horizontal body reinforcement (3.3).

9. Energy storing modular structural member (1,2) according to claim 2, **characterized in that** it comprises bolts (7) for coupling the lower coupling apparatus (5) to another similar coupling apparatus.

10. Energy storing modular structural member (1,2) according to claim 4 or 5, **characterized in that** the upper coupling anchor (6.3) and the lower coupling anchor (5.1) which provides the transfer of a load to the body of the energy storing modular structural member can be a toothed plate (8), a perforated plate (9), a porous and toothed plate (10) or a flat plate (11).

## Patentansprüche

1. Modulares Bauelement (1, 2), das Energie aus erneuerbaren Energiequellen oder aus jeder anderen Art von Wärmequelle speichern und gleichzeitig eine Tragkonstruktion für Gebäude bilden kann; das Bauelement eine Betonwärmespeichereinheit (1.1, 2.1) umfasst, die Wärme speichern kann und einen Wärmetauscher (1.5, 2.5) aufweist, der in der Mitte desselben installiert ist, und ein kastenförmiges, betonarmiertes Bauelement (1.4, 2.4), das eine äußerste Schicht um die Wärmespeichereinheit (1.1, 2.1) herum vorsieht, wobei ein flexibles Schutzisoliermaterial (1.2, 2.2) zwischen der Wärmespeichereinheit (1.1, 2.1) und dem die Betonwärmespeichereinheit umgebenden verstärkten Bauelement (1.4, 2.4) angeordnet ist, um sie vor thermischer Ausdehnung und/oder Lasteinflüssen aus der Umgebung und künstlichen Quellen zu schützen, **dadurch gekennzeichnet, dass** eine feste Isolationsschicht aus einem porösen zementbasierten Material (1.3, 2.3) zwischen dem flexiblen Schutzisoliermaterial (1.2, 2.2) und dem äußersten verstärkten Bauelement (1.4, 2.4) angeordnet ist.

2. Energiespeicherndes modulares Bauelement (1, 2) nach Anspruch 1, **dadurch gekennzeichnet, dass** das Element ferner eine untere Kupplungsvorrichtung (5) und eine obere Kupplungsvorrichtung (6) umfasst, die verwendet werden können, um das Element mit benachbarten Elementen zu verbinden und so Verbindungen einer Rahmenstruktur zu bilden.

3. Energiespeicherndes modulares Bauelement (1, 2) nach Anspruch 2, **dadurch gekennzeichnet, dass** das Element ferner Anker (2.6) umfasst, die in den Installationsfugen der Rahmen verwendet werden.

4. Energiespeicherndes modulares Bauelement (1, 2) nach Anspruch 2, **dadurch gekennzeichnet, dass** die untere Kupplungsvorrichtung (5) einen unteren Kupplungsanker (5.1) und eine untere Kupplungskappenvorrichtung (5.2) umfasst.

5. Energiespeicherndes modulares Bauelement (1, 2) nach Anspruch 2, **dadurch gekennzeichnet, dass** die obere Kupplungsvorrichtung (6) aus einer Eisenstange (6.1) gebildet ist, die eine obere Kupplungskappenvorrichtung (6.2) und einen oberen Kupplungsanker (6.3) umfasst.

6. Energiespeicherndes modulares Bauelement (1, 2) nach Anspruch 1, **dadurch gekennzeichnet, dass** das Element eine Verstärkung (3) für schwere Lastanforderungen und eine Verstärkung (4) für niedrige Lastanforderungen umfasst.

7. Energiespeicherndes modulares Bauelement (1, 2) nach Anspruch 6, **dadurch gekennzeichnet, dass** die Verstärkung (3) für hohe Beanspruchung aus einer kastenförmigen, gegossenen oder gefalteten Verstärkung (3.1), einer horizontalen Körperverstärkung (3.2) und einer vertikalen Körperverstärkung (3.3) gebildet ist.

8. Energiespeicherndes modulares Bauelement (1,2) nach Anspruch 6, **dadurch gekennzeichnet, dass** die Verstärkung (4) für niedrige Lastanforderungen aus einer vertikalen Körperverstärkung (4.1) und einer horizontalen Körperverstärkung (3.3) gebildet ist.

9. Energiespeicherndes modulares Bauelement (1, 2) nach Anspruch 2, **dadurch gekennzeichnet, dass** es Schrauben (7) zum Kuppeln der unteren Kupplungsvorrichtung (5) mit einer anderen ähnlichen Kupplungsvorrichtung umfasst.

10. Energiespeicherndes modulares Bauelement (1, 2) nach Anspruch 4 oder 5, **dadurch gekennzeichnet, dass** der obere Kupplungsanker (6.3) und der untere Kupplungsanker (5.1), der die Übertragung einer Last auf den Körper des energiespeichernden modularen Bauelements bereitstellt, eine Zahnplatte (8), eine Lochplatte (9), eine poröse und verzahnte Platte (10) oder eine flache Platte (11) sein können.

## Revendications

1. Elément de structure modulaire (1, 2) qui peut stocker l'énergie obtenue à partir de sources d'énergie renouvelables ou de tout autre type de source de chaleur et qui, en même temps, peut servir de structure de soutien aux bâtiments ; ledit élément structurel comprenant une unité de stockage de chaleur en béton (1.1, 2.1) qui peut stocker la chaleur et qui a un échangeur de chaleur (1.5, 2.5) installé au centre de celle-ci, et un élément de structure en béton armé en forme de caisson (1.4, 2.4) fournissant une couche extérieure autour de l'unité de stockage de chaleur (1.1, 2.1), dans lequel un matériau isolant protecteur flexible (1.2, 2.2) est disposé entre l'unité de stockage de chaleur (1.1, 2.1) et l'élément structurel renforcé (1.4, 2.4) entourant l'unité de stockage de chaleur en béton pour la protéger de la dilatation thermique et/ou des effets de charge provenant de sources environnementales et artificielles **caractérisé en ce qu'une couche isolante solide** faite d'un matériau poreux à base de ciment (1.3, 2.3) est disposée entre le matériau isolant protecteur flexible (1.2, 2.2) et l'élément structurel renforcé le plus extérieur (1.4, 2.4).

2. Elément de structure modulaire (1, 2) à stockage d'énergie selon la revendication 1, **caractérisé en ce que** l'élément comprend en outre un appareil d'accouplement inférieur (5) et un appareil d'accouplement supérieur (6) qui peuvent être utilisés pour relier l'élément aux éléments adjacents formant ainsi des joints d'une structure de cadre.

3. Elément de structure modulaire (1, 2) à stockage d'énergie selon la revendication 2, **caractérisé en ce que** l'élément comprend en outre des ancrages (2.6) qui sont utilisés dans les joints d'installation des cadres.

4. Elément de structure modulaire (1, 2) à stockage d'énergie selon la revendication 2, **caractérisé en ce que** ledit appareil d'accouplement inférieur (5) comprend un ancrage d'accouplement inférieur (5.1) et un appareil de chapeau d'accouplement inférieur (5.2).

5. Elément de structure modulaire (1, 2) à stockage d'énergie selon la revendication 2, **caractérisé en ce que** ledit appareil d'accouplement supérieur (6) est formé d'une tige de fer (6.1) comprenant un appareil de chapeau d'accouplement supérieur (6.2) et un ancrage d'accouplement supérieur (6.3).

6. Elément de structure modulaire (1, 2) à stockage d'énergie selon la revendication 1, **caractérisé en ce que** ledit élément comprend un renfort (3) pour les demandes de charges lourdes et un renfort (4) pour les demandes de faibles charges.

7. Elément de structure modulaire (1, 2) à stockage d'énergie selon la revendication 6, **caractérisé en ce que** ledit renfort (3) pour des demandes de charges lourdes est formé d'un renfort en forme de caisson moulé ou plié (3.1), d'un renfort de corps horizontal (3.2) et d'un renfort de corps vertical (3.3).

8. Elément de structure modulaire (1, 2) à stockage d'énergie selon la revendication 6, **caractérisé en ce que** l'armature (4) pour des exigences de faible charge est formée d'une armature de caisse verticale (4.1) et d'une armature de caisse horizontale (3.3).

9. Elément de structure modulaire (1, 2) à stockage d'énergie selon la revendication 2, **caractérisé en ce que** il comprend des boulons (7) pour accoupler l'appareil d'accouplement inférieur (5) à un autre appareil d'accouplement similaire.

10. Elément de structure modulaire (1, 2) à stockage d'énergie selon la revendication 4 ou 5, **caractérisé en ce que** l'ancrage d'accouplement supérieure (6.3) et l'ancrage d'accouplement inférieure (5.1) qui assure le transfert d'une charge au corps de l'élément de structure modulaire à stockage d'énergie peut être une plaque dentée (8), une plaque perforée (9), une plaque poreuse et dentée (10) ou une plaque plane (11).
